# FASCICULE DE BREVET EUROPEEN

(11) **EP 0 720 409 B1**
(45) Date de publication et mention de la délivrance du brevet: **27.11.2002**
(21) Numéro de dépôt: 95402945.0
(22) Date de dépôt: 26.12.1995
(51) Int. Cl.: H04Q 11/00, H04L 12/56

(54) **Matrice de commutation photonique**
Photonische Schaltmatrix
Photonic switching matrix

(30) Priorité: 29.12.1994 FR 9415863
(43) Date de publication de la demande: 03.07.1996
(73) Titulaire: ALCATEL, 75008 Paris (FR)
(72) Inventeur: Masetti, Francesco, F-75015 Paris (FR)
(74) Mandataire: Sciaux, Edmond

(56) Documents cités:
- EP-A- 0 368 569
- JOURNAL OF LIGHTWAVE TECHNOLOGY, vol. 11, no. 5/6, Mai 1993 NEW YORK US, pages 925-936, XP 000396722 Z. HAAS 'The "Staggering Switch": An Electronically Controlled Optical Packet Switch'
- CONFERENCE RECORD, IEEE INTRNATIONAL CONFERENCE ON COMMUNICATIONS '86, 22-25 JUIN 1986, VOL. 3 PAGES 1725-1729, TORONTO CN, A. HUANG 'The Relationship Between STARLITE, a Wideband Digital Switch and Optics'
- EUROPEAN TRANSACTIONS ON TELECOMMUNICATIONS AND RELATED TECHNOLOGIES, vol. 4, no. 6, Novembre 1993 MILANO IT, pages 671-270, XP 000433724 F. MASETTI ET AL 'Optical Fiber Buffer for High Performance Broadband Switching'

## Description

La présente invention concerne une matrice de commutation photonique permettant de commuter des données se présentant sous la forme de signaux optiques numériques constituant des cellules de longueur (c'est-à-dire de durée) fixe, multiplexées pour former des trains de cellules selon la technique du multiplexage temporel asynchrone.

Le train de cellules d'entrée arrivant sur un accès d'entrée d'une telle matrice de commutation comprend ainsi des cellules consécutives, porteuses d'information de communication, chacune formée d'un certain nombre de caractères (il existe par exemple un standard ATM qui adopte des cellules de 53 caractères à 8 bits). Chacune de ces cellules contient une indication d'acheminement exploitable pour acheminer la cellule, au sein de la matrice de commutation, vers un (ou plusieurs) accès de sortie, où la cellule prendra place dans un train de cellules de sortie. Certaines des cellules d'un train de cellules ne contiennent aucune information de communication, mais seulement des informations de service. On les appelle communément cellules vides. Elles sont aisément reconnaissables. Il n'est pas nécessaire de les acheminer. On insère par contre de telles cellules dans un train de cellules de sortie, au niveau d'un accès de sortie, toutes les fois qu'il n'y a pas de cellule porteuse d'information à transmettre par cet accès de sortie.

Une matrice comporte plusieurs accès d'entrée et plusieurs accès de sortie. Il peut se produire que des cellules de plusieurs accès d'entrée doivent être commutées, vers un même accès de sortie. Plusieurs cellules peuvent ainsi de présenter ensemble et être destinées à un même accès de sortie. Cela pose un problème de contention. Il est résolu de manière connue par l'emploi de mémoires tampon. On peut ainsi disposer des mémoires tampon aux accès d'entrée, pour mémoriser chaque cellule jusqu'à ce que l'accès de sortie destinataire puisse la recevoir, ou aux accès de sortie, pour mémoriser chaque cellule jusqu'à ce qu'elle puisse être insérée dans le train de cellules de sortie, ou de façon centralisée, pour mémoriser les cellules fournies par les accès d'entrée, lorsqu'elles se présentent, et les fournir une à une aux accès de sortie.

L'invention concerne ce dernier type de matrice de commutation dotée d'une mémoire tampon centralisée. On en trouvera une illustration dans le document **FR - 2 672 172**.

Dans cette matrice connue, les cellules destinées à un même accès de sortie sont modulées sur une onde porteuse optique ayant une longueur d'onde associée à cet accès de sortie. Dans son acheminement entre un accès d'entrée et un accès de sortie, une cellule est aiguillée vers l'un de Q trajets optiques, offrant des retards respectifs de O, 1..., Q-1 temps cellule. Un temps cellule est le temps nécessaire pour transmettre une cellule sur un accès de sortie, ou le temps qu'elle occupe dans le train de cellules de sortie. Ces trajets optiques à retard constituent ainsi une mémoire tampon et permettent de fournir à un même accès de sortie des cellules échelonnées dans le temps. Comme les cellules destinées aux différents accès de sortie ont des longueurs d'onde porteuse différentes, ces trajets optiques à retard peuvent être utilisés en commun, par multiplexage en longueur d'onde, pour fournir à tous les accès de sortie des cellules échelonnées dans le temps.

Comme il est décrit dans le document mentionné, un tel agencement de matrice de commutation comporte une limitation structurelle : si, par suite d'un afflux soudain de cellules destinées au même accès de sortie, on a déjà placé une cellule dans le trajet offrant un retard de Q-1 temps cellule et si une cellule supplémentaire doit être acheminée au même moment vers l'accès de sortie considéré, cette cellule sera perdue ce qui, en matière de performances de la matrice de commutation, limite le débit moyen admissible par accès d'entrée.

La présente invention concerne des dispositions visant à réduire la probabilité d'une telle éventualité et à augmenter considérablement le débit moyen admissible par accès d'entrée de la matrice.

Par ailleurs, il est connu par le document **US 4,866,701** de prévoir que certaines sorties d'une matrice de commutation reçoivent des paquets, équivalents aux cellules ci-dessus mentionnées, ne pouvant pas être fournis à des accès de sortie qui en reçoivent d'autres au même instant, qui sont acheminés par des trajets de recirculation et sont ainsi réintroduits à des entrées de la matrice, avec un retard fixe déterminé, égal à un temps cellule, après lequel ces paquets seront à nouveau acheminés par la matrice de commutation vers leur destination de sortie. Si à nouveau cela n'est pas possible, les paquets en question seront renvoyés vers les trajets de recirculation.

De telles dispositions permettent donc d'éviter que soit perdue une cellule qui ne peut pas être acheminée par la matrice de commutation. Elles s'appliquent dans un réseau de type Batcher/Banyan dont les propriétés et les problèmes sont différents de ceux de la matrice de commutation photonique objet de la présente invention.

La solution décrite par le document **EP 0.368.569** ne comporte pas de mémoire tampon mais des réseaux de commutation et une mémoire de recirculation. Tous les paquets arrivent jusqu'au niveau des sorties avec un retard constant correspondant à la traversée des réseaux de commutation, mais des moyens de commande détectent ceux qui ne peuvent pas sortir, parce que la sortie de destination est déjà utilisée pour un autre paquet. Ces moyens de commande prélèvent ces paquets sur des sorties supplémentaire du réseau de commutation, et ils les ré-injectent dans des entrées supplémentaires de ce réseau de commutation. La mémoire de recirculation permet de retarder ces paquets d'un intervalle paquet avant de les réinjecter. Si une sortie reste occupée après ce délais, les moyens de commande peuvent décider de faire recirculer un paquet encore une fois, jusqu'à ce que la sortie visée soit libre.

Comme il s'agit d'une matrice de commutation électronique (et non optique) la mémoire de recirculation est constituée par M registres en parallèle, procurant un retard égal à un intervalle paquet, et stockant en parallèle M paquets au maximum. Si on veut réduire encore le risque de perte de paquets, il est suggéré d'augmenter le nombre M des accès de sortie supplémentaires et des registres en parallèle, mais cette solution est limitée par le coût de réalisation.

Les calculs de trafic indiquent que, si les problèmes de contention rencontrés lorsque l'on veut accepter un débit moyen de 0,5 Erlang par accès d'entrée dans une matrice de 16 accès d'entrée et de 16 accès de sortie, pour un taux de perte donnée, demandent des retards de O à 15 temps cellule, atteindre un débit moyen de 0,8 Erlang par accès d'entrée, avec le même taux de perte, peut demander jusqu'à un retard de 50 temps cellule. Il faudrait alors, selon le document **FR - 2 672 172,** prévoir 50 trajets à retard, ce qui serait très coûteux et pose des problèmes technologiques au moment de distribuer les cellules d'un même accès d'entrée vers 50 trajets à retard, de même qu'au moment de regrouper des cellules ayant emprunté l'un quelconque des 50 trajets à retard pour les transmettre à un même accès de sortie. La solution de recirculation présentée par les documents **US 4,866,701** et **EP 0.368.569** demanderait quant à elle jusqu'à 50 - 16 = 34 cycles de recirculation par cellule, ce qui impliquerait une lourde de charge pour la commande de ces cycles de recirculation, et un grand nombre de trajets de recirculation, puisque chacun d'eux ne contient qu'une cellule pendant un temps cellule.

La présente invention apporte une solution viable à ce problème, qui permette d'augmenter considérablement le débit moyen par accès d'entrée de la matrice, avec le même taux de perte, tout en ne demandant que des moyens de commande et d'acheminement limités en complexité et en coût.

L'invention concerne donc une matrice de commutation photonique comprenant :
- plusieurs accès d'entrée et plusieurs accès de sortie,
- des moyens de modulation associés aux accès d'entrée, pour moduler des cellules destinées à un même accès de sortie sur une porteuse optique ayant une même longueur d'onde attribuée à cet accès de sortie,
- des mémoires tampon centralisées, pour mémoriser des cellules modulées par les moyens de modulation, lorsqu'elles se présentent, et les fournir une à une aux accès de sortie, lesdites mémoires tampon centralisées comprenant Q trajets optiques, offrant des retards respectifs de 0, 1..., Q-1 temps cellule, disposés entre lesdits accès d'entrée et lesdits accès de sortie,
- des moyens de commande comportant des moyens pour aiguiller chaque cellule vers un accès de sortie et pour sélectionner un retard à appliquer à chaque cellule, dans les mémoires tampons, de sorte que les cellules arrivent une à une sur un même accès de sortie ;
**caractérisée** en ce qu'elle comprend en outre une pluralité d'accès de sortie supplémentaires, et un élément de retard dit de recirculation, couplé à ces accès de sortie supplémentaires, et couplé à une pluralité d'accès d'entrée dits de recirculation, cet élément de retard étant apte à appliquer à chaque cellule un retard commandable correspondant à un nombre variable de temps cellules,
et en ce que les moyens de commande comportant des moyens pour :
-- aiguiller chaque cellule vers un accès de sortie auquel elle est destinée, si elle peut être aiguillées directement vers cet accès, ou aiguiller cette cellule vers un accès de sortie supplémentaire lorsqu'elle ne peut pas être aiguillée directement vers l'accès de sortie auquel elle est destinée,
-- et sélectionner un retard à appliquer à chaque cellule, dans ledit élément de retard de recirculation, de manière à réintroduire cette cellule dans les mémoires tampons sans risquer de les surcharger.

L'invention permet donc d'introduire un retard commandable dans chaque trajet de recirculation et donc de faire en sorte que toute cellule empruntant un trajet de recirculation y soit retardée d'autant de temps cellule qu'il est nécessaire avant d'être présentée audit accès de recirculation pour être aiguillée cette fois vers l'accès de sortie auquel elle est destinée. On y gagne, par rapport au deuxième document cité, en ce qu'une seule commande de recirculation est nécessaire et en ce que le nombre de trajets de recirculation est fortement réduit.

Avantageusement, ledit élément à retard commutable est unique, un multiplexeur optique couplant ladite pluralité d'accès de sortie supplémentaires, lesquels fournissent des cellules modulées sur des ondes porteuses différentes, à une entrée de cet élément à retard qui retarde sélectivement ces cellules d'ondes porteuses différentes.

Un tel élément à retard est par exemple décrit dans l'article "An ATM photonic switching module : dimensional and architectural analysis" de G. Bendelli et al, publié dans les "Proceedings of the European Conference on Optical Communications", 1994, Vol. 2, pages 821-824.

De plus, entre chacun desdits accès de sortie supplémentaires et ledit élément à retard, un convertisseur de longueur d'onde commandable permet de changer sélectivement la longueur d'onde de l'onde porteuse d'une cellule, pour augmenter par multiplexage en longueur d'onde le nombre de cellules pouvant être retardées par ledit élément à retard.

Dans une forme de mise en oeuvre, la sortie dudit élément à retard commandable, après démultiplexage en longueur d'onde, est couplée à une pluralité d'accès d'entrée supplémentaires.

Mais, avantageusement, la sortie dudit élément à retard commandable, après démultiplexage en longueur d'onde, est couplée à une pluralité d'accès d'entrée, en amont desdits moyens de modulation.

Cela permet d'admettre des cellules en provenance des trajets de recirculation, sur les accès d'entrée normaux, en leur faisant prendre la place de cellules vides. Les moyens de modulation réaliseront alors la conversion de longueur d'onde adéquate.

Avantageusement, une matrice de commutation spatiale peut être insérée entre la sortie dudit élément à retard, après démultiplexage, et ladite pluralité d'accès d'entrée.

Cela peut permettre d'utiliser, au mieux des besoins, les cellules vides incluses dans les trains de cellules des différents accès d'entrée pour l'admission de cellules en provenance des trajets de recirculation.

Les différents objets et caractéristiques de l'invention apparaîtront plus clairement à la lumière de la description qui va suivre d'exemples de réalisation de l'invention, faite en se référant aux figures annexées qui représentent :
- la figure 1, un premier mode de mise en oeuvre de l'invention dans lequel les trajets de recirculation sont connectés à des accès d'entrée supplémentaires de la matrice de commutation,
- la figure 2, un deuxième mode de mise en oeuvre de l'invention dans lequel les trajets de recirculation sont couplés en tiers sur des accès d'entrée normaux.

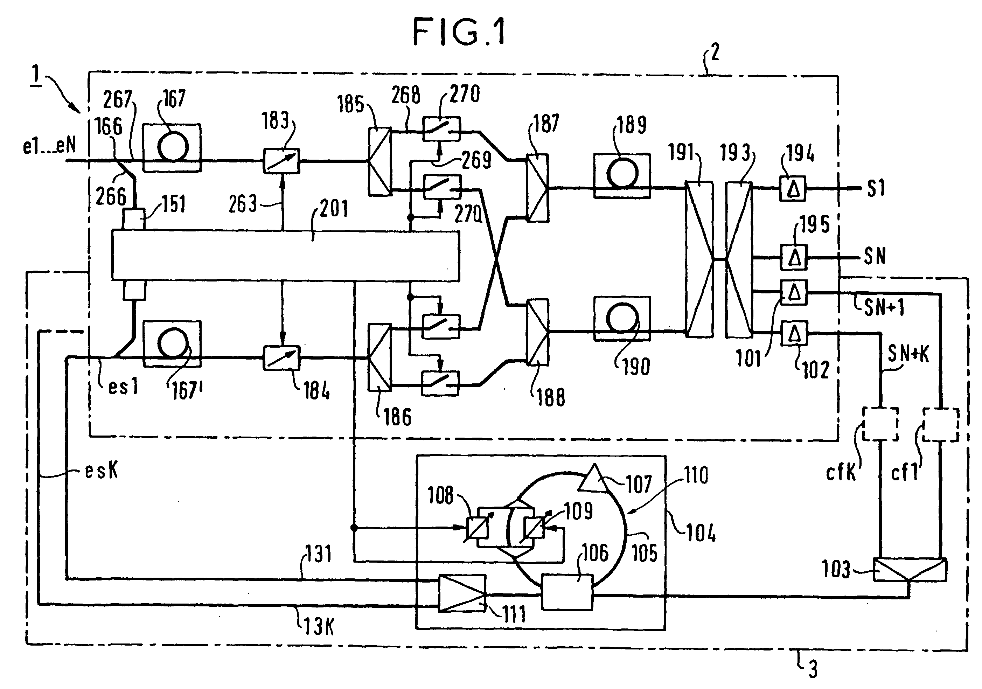

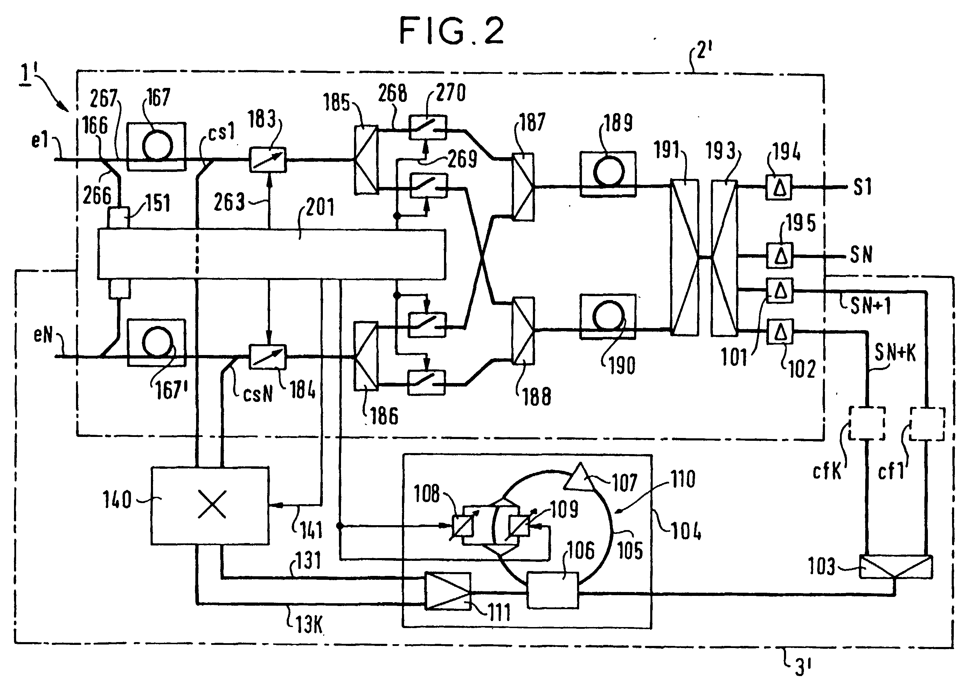

La figure 1 représente une matrice de commutation photonique 1 qui dérive de celle qui est représentée par la figure 2 du premier document cité au début de ce texte et, pour en faciliter la compréhension, on a conservé les mêmes références, toutes les fois que cela était possible.

Cette matrice de commutation photonique 1 comprend essentiellement une matrice de commutation de cellules 2 et un dispositif de recirculation de cellules 3.

La matrice de commutation de cellules 2 comprend N accès d'entrée optique el à eN, dont un seul est figuré. Ces accès d'entrée véhiculent des cellules d'une longueur (ou durée) fixe, dont les premiers caractères constituent une en-tête contenant une indication d'acheminement. Chacune des cellules d'un accès d'entrée traverse un coupleur optique 166 dont une première sortie 266 donne accès à un détecteur optique 151 fournissant à un dispositif de commande 201 l'information contenue dans la cellule et spécialement son en-tête, sous forme électrique. Une autre sortie 267 du coupleur 166 conduit à un élément à retard 167, pouvant être réalisé sous la forme d'une boucle de fibre optique, dont le temps de parcours par la cellule est de la durée de transmission d'une cellule. Ce laps de temps donne au dispositif de commande 201 le temps de traiter l'en-tête de la cellule avant de l'acheminer, c'est-à-dire de préparer les divers signaux de commande qui vont concourir à son acheminement dans la matrice de commutation. A l'issue de ce laps de temps, la cellule parvient à un convertisseur de longueur d'onde 183 que commande le dispositif de commande 201, par une liaison électrique 263. Si l'on suppose que la cellule considérée est destinée à être transmise sur un accès de sortie S1, le convertisseur de longueur d'onde 183 module une onde porteuse d'une longueur d'onde λ1, associée à cet accès de sortie S1, par l'information contenue dans la cellule. La cellule arrive alors sur un diffuseur optique 185 qui produit autant d'exemplaires de la cellule qu'il comporte de sorties. Chacune de ces sorties est suivie d'une porte optique 270..., 27Q que commande le dispositif de commande 201 par une liaison 269. Si l'on suppose qu'aucune autre cellule n'est commutée au même moment en direction de la sortie S1, la porte 270 seule est passante. Les autres sont bloquées. L'exemplaire de la cellule franchissant cette porte 270 parvient à un combineur optique 187, lequel est suivi d'une ligne à retard 189, dont le temps de retard est pratiquement nul. Il parvient donc aussitôt à un combineur 191 suivi d'un diffuseur 193. Cet exemplaire est alors distribué sur des filtres tels que 194. Seul le filtre 194 lui livre le passage sur l'accès de sortie S1.

Si la cellule en question est destinée à l'accès de sortie SN, au lieu de S1, le dispositif de commande, l'apprenant par son en-tête, règle le convertisseur 183 sur la longueur d'onde λN, de sorte que le filtre 195 la laisse passer sur l'accès de sortie SN.

Des cellules provenant d'autres accès d'entrée sont acheminées en même temps de la même façon, à la condition que chacune d'elles soit destinée à un accès de sortie différent.

Si la cellule en question, destinée à l'accès de sortie S1, n'est pas seule dans ce cas, et si une autre cellule, prenant l'avantage, est acheminée directement, comme on vient de le décrire, jusqu'à l'accès de sortie S1, le dispositif de commande, au lieu de rendre passante la porte 270, rend passante une porte optique semblable 271 non représentée, menant à une ligne à retard semblable à la ligne à retard 189 et également non représentée, apportant un retard égal à un temps cellule (temps de transmission d'une cellule sur les accès de sortie). Cette cellule parviendra donc au combineur 191 et de là à l'accès de sortie S1 un temps cellule plus tard, pour être transmise après celle qui a pris l'avantage sur elle.

Si la cellule en question, toujours destinée à l'accès S1, est accompagnée de deux autres cellules qui prennent l'avantage sur elle, elle est commutée par une autre porte (non représentée) et une autre ligne à retard, de retard égal à deux temps cellule, pour n'arriver sur l'accès de sortie Si qu'après les deux premières, et ainsi de suite, pour d'autres cellules à commuter simultanément en direction de l'accès de sortie S1.

Au temps cellule suivant celui que l'on vient de considérer, une cellule visant l'accès de sortie S1 est acheminée aussi vers la ligne à retard de deux temps cellule, parce que celle-ci n'est pas vide, afin de respecter la chronologie des cellules traversant la matrice de commutation.

A ce temps cellule suivant, une autre cellule visant aussi l'accès de sortie S1 devra être aiguillée vers une ligne à retard de trois temps cellule, et ainsi de suite.

On voit que, si l'accès de sortie S1 est visé de façon répétée, les cellules entrantes vont progressivement être acheminées par des lignes à retard correspondant à des nombres croissants de temps cellule, jusqu'à la dernière ligne à retard, 190, représentée sur la figure.

Tout ce qui vient d'être dit à propos de cellules visant l'accès de sortie S1 peut être répété à propos des autres accès de sortie. Seule change la longueur d'onde. Les lignes à retard, combineurs, diffuseurs, ignorent la longueur d'onde et opèrent pour toutes les longueurs d'onde, par multiplexage spectral.

Mais, toutefois, si l'on constate une accumulation de cellules visant l'accès de sortie S1 dans la mémoire tampon, il est peu probable qu'une telle accumulation se produise au même moment pour un autre accès de sortie, et la probabilité que cela se produise pour d'autres accès de sortie encore baisse très vite quand le nombre d'accès de sortie considéré augmente.

Tout ce qui précède est décrit dans le premier document mentionné auquel le lecteur est renvoyé pour de plus amples détails.

L'invention concerne des dispositions ajoutées à ce que l'on vient de décrire et qui répondent au problème que l'on va maintenant exposer.

On a vu qu'un afflux de cellules visant toutes l'accès de sortie S1 aboutit à ce qu'une cellule soit acheminée par la ligne à retard 190. S'il s'en présente alors une de plus, au même moment, visant toujours l'accès de sortie S1, il est indiqué dans ce document antérieur qu'il n'y a plus de solution ; la dernière cellule considérée est perdue.

Pour éviter cela, l'invention prévoit des accès de sortie supplémentaires SN+1 à SN+K et un dispositif de recirculation que l'on va décrire plus loin, après avoir indiqué d'abord comment était acheminée une cellule surnuméraire telle que celle que l'on vient de mentionner.

A ces accès de sortie sont associées des longueurs d'onde porteuses λN+1 à λN+K. L'acheminement vers ces sorties supplémentaires se fait, lorsque le procédé décrit précédemment échoue, par un changement de destination effectué dans le dispositif de commande 201 qui a connaissance de l'état d'occupation des différentes files d'attente, les accès de sortie SN+1 à SN+K étant utilisés l'un après l'autre au fur et à mesure des besoins.

Le dispositif de recirculation 2 est couplé aux accès de sortie SN+1 à SN+K et comprend un combineur optique réunissant les cellules d'ondes porteuses différentes de ces accès de sortie supplémentaires pour les transmettre à un élément de retard commandable 104 dans lequel ces cellules sont conservées le temps qu'il faut, sous la commande du dispositif de commande 201. Le moment venu, sous la commande du dispositif de commande, ces cellules sont fournies par l'élément de retard 104 sur des liaisons de sortie 131 à 13K. Celles-ci conduisent à des accès d'entrée supplémentaires esl à esK de la matrice de commutation 2 qui sont traités comme des accès normaux. Les cellules fournies sur ces accès d'entrée sont celles qui ont été reçues précédemment sur des accès normaux. Elles n'en différent que par la longueur d'onde porteuse, mais la longueur d'onde de toute cellule fournie sur un accès d'entrée supplémentaire est celle qui était associée à l'accès de sortie supplémentaire par lequel la cellule a été transférée au dispositif de recirculation. Elle est donc connue. Les accès d'entrée supplémentaires sont donc traités exactement comme des accès d'entrée normaux. Le dispositif de commande 201 donne toutefois aux cellules qui parviennent à la matrice de commutation par les accès d'entrée supplémentaires la priorité sur les cellules lui parvenant par les accès d'entrée normaux. Les premières seront donc acheminées à la suite des cellules les précédant acheminées normalement comme décrit précédemment. Les secondes, non prioritaires, feront donc l'objet d'une recirculation et seront donc acheminées après les premières. Cela est nécessaire pour préserver la chronologie des cellules d'un même accès d'entrée vers un même accès de sortie.

Globalement, le dispositif de commande aiguille ainsi une première cellule qui ne peut pas être directement acheminée avec un accès de sortie auquel elle est destinée vers un accès de sortie supplémentaire. Cet aiguillage peut inclure un retard de Q-1 temps cellule, de sorte que, pour conserver l'ordre chronologique des cellules destinée à une même sortie, il suffit que le dispositif de recirculation la retarde d'un temps cellule seulement. Cette cellule occupera un des accès de sortie supplémentaires. D'autres cellules destinée à la même sortie, présentes simultanément, occuperont d'autres accès de sortie supplémentaires. Elles devront faire l'objet de retard progressivement croissant, ce qui permettra de les réintroduire une à une, sans risquer de surcharger la mémoire tampon du dispositif de commutation de cellules. D'autres cellules, toujours pour la même destination, suivront et seront conservés de même dans le dispositif de recirculation.

Le même processus s'appliquera éventuellement dans la même période, au sujet de cellules destinées à un autre accès de sortie, ou à d'autres accès de sortie, demandant des accès de sortie supplémentaires additionnels et des longueurs d'onde optiques additionnelles pour le stockage de cellules dans l'élément de retard. Le nombre de ces longueurs d'onde nécessaires pour la recirculation étant supérieur au nombre des accès de sortie supplémentaires nécessaires, on verra à la fin de ce texte comment des longueurs d'ondes supplémentaires peuvent être rendues disponibles.

Bien entendu, ce qui précède n'est donné qu'à titre d'exemple, car on comprend bien que des processus plus complexes peuvent être mis en oeuvre, en jouant sur les retards que peuvent apporter, conjointement, la mémoire tampon de la matrice de commutation de cellule et celle du dispositif de recirculation.

Le mode de réalisation de l'élément de retard 104 est sommairement illustré sur la figure 1 et comprend une coupleur 2 x 2, 106, une batterie de filtres optiques commandables, tels que 108 et 109, ainsi qu'un amplificateur optique 107, disposés dans une boucle de fibre optique 110. La sortie du multiplexeur de longueurs d'onde 103 est connectée à un accès d'entrée du coupleur 2 x 2, la sortie de l'amplificateur optique 107 à l'autre accès d'entrée de ce coupleur. Une des deux sorties de ce coupleur est connectée à la batterie de filtres, tandis que son autre sortie est connectée à un démultiplexeur optique 111 attaquant les accès de sortie de l'élément de retard 104.

Un tel dispositif est décrit dans l'article de Bendelli est al mentionné précédemment. Le dispositif de commande 201, par action sur chacun des filtres détermine l'effacement d'une cellule de longueur d'onde correspondante qui tournait dans la boucle de fibre optique, prenant un temps cellule de retard par rotation commplète. A même moment, par action sur le convertisseur de fréquence de l'accès d'entrée recevant cette cellule, le dispositif de commande détermine son acheminement par la matrice de commutation jusqu'à la sortie à laquelle elle est destinée.

Un deuxième exemple de mise en oeuvre de l'invention est illustré à la figure 2. La matrice de commutation de cellule 2' est semblable à la matrice de commutation de cellules 2 de la figure 1, sauf en ce que les entrées supplémentaires esl à esK n'existent plus, les entrées normales el et eN étant toutes deux représentées, comportant additionnellement un coupleur de recirculation cs1 à csN. En l'absence de recirculation, ces coupleurs sont inactifs. Tous les autres éléments de la matrice de commutation de cellules de la figure 2 sont identiques et jouent le même rôle que les éléments correspondant de la matrice de commutation de cellules de la figure 1 et portent pour cette raison la même référence. Le fonctionnement de la matrice en l'absence de recirculation est identique à ce qui a été décrit à propos de la figure 1. On ne le repétera donc pas. L'envoi de cellules surnuméraires en direction des trajets de recirculation a lieu également de la même façon que précédemment.

Par ailleurs, le dispositif de recirculation 3' est semblable au dispositif de recirculation 3 de la figure 1 et, à nouveau, les mêmes éléments conservent les mêmes fonctions et sont désignés par les mêmes références, sauf en ce qu'il comprend additionnellement une matrice de commutation spatiale 140, directement commandée par le dispositif de commande 201, grâce à une liaison multiple 141. Cette matrice permet, à tout instant, sous la commande du dispositif de commande 201 de connecter l'un quelconque des K accès de sortie 131 à 13K de l'élément de retard 104 à l'un quelconque des N accès d'entrée de la matrice de commutation de cellules 2', par l'intermédiaire des coupleurs de recirculation déjà mentionnés.

La différence dans le fonctionnement de la matrice de commutation de la figure 2, par rapport à celle de la figure 1 est que les cellules conservées dans l'élément de retard 104 et libérées sous la commande du dispositif de commande 201, sont insérées chacune dans l'un quelconque des trains de cellules d'entrée, à la place d'une cellule vide, lorsque le dispositif de commande 201 en détecte une. A ce moment le convertisseur de longueur d'onde 183, 184 reçoit une commande permettant la conversion entre la longueur d'onde de la cellule de recirculation, de λN+1 à λN+K, et la longueur d'onde associée à la sortie visée. Le résultat est le même qu'avec la matrice de commutation de la figure 1, en termes de possibilités et de performances d'acheminement de cellules, dans la mesure où, en pratique, le débit de cellules vides est suffisant pour le besoin, ce que montrent les calculs de trafic. On économise des entrées supplémentaires, ce qui permet de desserrer les contraintes technologiques se rapportant aux coupleurs optiques 187, 188, au prix, au plus, d'une matrice de commutation spatiale 140.

En effet, dans une autre variante, on pourrait simplement coupler les K accès de sortie du dispositif de recirculation à K parmi les N accès d'entrée de la matrice de commutation de cellules.

Il convient de remarquer que, dans un cas comme dans l'autre, il est possible que des cellules destinées à des accès de sortie différents soient émises simultanément, lorsque le trafic d'entrée comprend suffisamment de cellules vides.

Il reste à mentionner que, dans les deux modes de mise en oeuvre illustrés, on a représenté des convertisseurs de longueur d'onde additionnels cfl à cfK, interposés entre les accès de sortie supplémentaires sN+1 à sN+K et le combineur optique 103 (on peut les voir indifféremment dans la matrice de commutation de cellules 2, 2', ou dans le dispositif de recirculation 3, 3') et directement commandés, par des liaisons non représentées, par le dispositif de commande 201. Ils permettent, sur chaque trajet de recirculation, de multiplier les longueurs d'onde disponibles, afin de multiplier les cellules pouvant être acceptées par le dispositif de recirculation. Ainsi, pour la sortie SN+1, de longueur d'onde λN+1, le convertisseur cfl change sélectivement la longueur d'onde de λN+1 en λN+1, λN+1+K, λN+1+2K... λN+1+MK. Il en va de même pour les autres accès, ce qui multiplie par M+1 le nombre de cellules qui peuvent être stockées dans l'élément de retard 104. Des convertisseurs symétriques pourraient être prévus aux accès de sortie de l'élément de retard 104, ou, plus simplement, les convertisseurs 183, 184 pourraient en assumer la fonction.

Il est bien évident que les descriptions qui précède n'ont été données qu'à titre d'exemple limitatif et que les valeurs numériques, notamment, peuvent changer avec chaque application.

## Revendications

1. Matrice de commutation photonique comprenant :
- plusieurs accès d'entrée et plusieurs accès de sortie,
- des moyens de modulation associés aux accès d'entrée, pour moduler des cellules destinées à un même accès de sortie sur une porteuse optique ayant une même longueur d'onde attribuée à cet accès de sortie,
- des mémoires tampon centralisées (189, ..., 190), pour mémoriser des cellules modulées par les moyens de modulation, lorsqu'elles se présentent, et les fournir une à une aux accès de sortie, lesdites mémoires tampon centralisées comprenant Q trajets optiques, offrant des retards respectifs de 0, 1..., Q-1 temps cellule, disposés entre lesdits accès d'entrée et lesdits accès de sortie,
- des moyens de commande (201) comportant des moyens pour aiguiller chaque cellule vers un accès de sortie et pour sélectionner un retard à appliquer à chaque cellule, dans les mémoires tampons, de sorte que les cellules arrivent une à une sur un même accès de sortie ;
**caractérisée en ce qu'**elle comprend en outre une pluralité d'accès de sortie supplémentaires, et un élément de retard (104) dit de recirculation, couplé à ces accès de sortie supplémentaires, et couplé à une pluralité d'accès d'entrée dits de recirculation, cet élément de retard étant apte à appliquer à chaque cellule un retard commandable correspondant à un nombre variable de temps cellules,
et **en ce que** les moyens de commande (201) comportant des moyens pour :
-- aiguiller chaque cellule vers un accès de sortie auquel elle est destinée, si elle peut être aiguillées directement vers cet accès, ou aiguiller cette cellule vers un accès de sortie supplémentaire lorsqu'elle ne peut pas être aiguillée directement vers l'accès de sortie auquel elle est destinée,
-- et sélectionner un retard à appliquer à chaque cellule, dans ledit élément de retard de recirculation, de manière à réintroduire cette cellule dans les mémoires tampons sans risquer de les surcharger.

2. Matrice de commutation photonique conforme à la revendication 1, **caractérisée en ce que** ledit élément de retard de recirculation (104) comporte : un seul élément à retard commandable, pour tous les accès de sortie supplémentaires ; et un multiplexeur optique couplant ladite pluralité d'accès de sortie supplémentaires, lesquels fournissent des cellules modulées sur des ondes porteuses différentes, à une entrée de cet élément à retard qui retarde sélectivement ces cellules d'ondes porteuses différentes.

3. Matrice de commutation photonique conforme à la revendication 2, **caractérisée en ce que**, entre chacun desdits accès de sortie supplémentaires et ledit elément de retard de recirculation (104), un convertisseur de longueur d'onde commandable (cf1, ..., cfK) permet de changer sélectivement la longueur d'onde de l'onde porteuse d'une cellule, pour augmenter par multiplexage en longueurs d'onde, le nombre de cellules pouvant être retardées par ledit élément de retard.

4. Matrice de commutation photonique conforme à la revendication 2 ou 3, **caractérisée en ce que** la sortie dudit élément à retard commandable, après démultiplexage en longueurs d'onde, est couplée à la pluralité d'accès d'entrée supplémentaires.

5. Matrice de commutation photonique conforme à la revendication 2 ou 3, **caractérisée en ce que** la sortie dudit élément à retard commandable, après démultiplexage en longueur d'onde, est couplée à la pluralité d'accès d'entrée, en amont desdits moyens de modulation.

6. Matrice de commutation photonique conforme à la revendication 5, **caractérisée en ce qu'**une matrice de commutation spatiale est insérée entre la sortie dudit élément à retard, après démultiplexage, et ladite pluralité d'accès d'entrée.

## Claims

1. Photonic switching network comprising
- a plurality of input ports and a plurality of output ports,
- modulation means associated with the input ports to modulate cells addressed to the same output port onto an optical carrier having a wavelength assigned to that output port,
- centralized buffers (189, ..., 190) for storing cells modulated by the modulation means as and when they arrive and supplying them one by one to the output ports, said centralized buffers comprising Q optical paths offering respective time-delays of 0, 1, ..., Q-1 cell times between said input ports and said output ports,
- control means (201) comprising means for switching each cell to an output port and for selecting a time-delay to be applied to each cell in the buffers so that the cells arrive one by one at an output port;
**characterized in that** it further comprises a plurality of supplementary output ports, and a recirculating time-delay element (104), coupled to these supplementary output ports, and coupled to a plurality of recirculating input ports, this time-delay element being adapted to apply to each cell a controllable time-delay corresponding to a variable number of cell times,
and **in that** the control means (201) include means for:
-- switching each cell to an output port for which it is intended, if it can be switched directly to that port, or switching this cell to a supplementary output port when it cannot be switched directly to the output port for which it is intended, and
-- selecting a time-delay to be applied to each cell, in said recirculating time-delay element, in such a manner as to reintroduce this cell into the buffer memories without risk of overloading them.

2. Photonic switching network according to claim 1 **characterized in that** said recirculation time-delay element (104) includes: only one switchable time-delay element, for all additional output ports; and an optical multiplexer coupling said plurality of additional output ports, which supply cells modulated onto different carriers, to an input of said time-delay element that selectively delays these cells on different carriers.

3. Photonic switching network according to claim 2 **characterized in that**, between each of said additional output ports and said time-delay element (104), a controllable wavelength converter (cf1, ..., cfk) selectively converts the wavelength of the carrier of a cell to increase by wavelength multiplexing the number of cells that can be delayed by said time-delay element.

4. Photonic switching network according to claim 2 or claim 3 **characterized in that** the output of said controllable time-delay element, after wavelength demultiplexing, is coupled to a plurality of additional input ports.

5. Photonic switching network according to claim 2 or claim 3 **characterized in that** the output of said controllable time-delay element, after wavelength demultiplexing, is coupled to a plurality of input ports on the input side of said modulation means.

6. Photonic switching network according to claim 5 **characterized in that** a space switching matrix is inserted between the output of said time-delay element, after demultiplexing, and said plurality of input ports.

## Patentansprüche

1. Photonen-Schaltmatrix, die umfasst:
- mehrere Eingangsanschlüsse und mehrere Ausgangsanschlüsse,
- Modulationsmittel, die den Eingangsanschlüssen zugeordnet sind und Zellen, die für denselben Ausgangsanschluss vorgesehen sind, auf einer optischen Trägerwelle modulieren, die eine diesem Ausgangsanschluss zugewiesene Wellenlänge besitzt,
- zentralisierte Pufferspeicher (189, ..., 190), die die durch die Modulationsmittel modulierten Zellen speichern, wenn diese auftreten, und sie einzeln nacheinander an die Ausgangsanschlüsse liefern, wobei die zentralisierten Pufferspeicher Q optische Wege aufweisen, die jeweilige Verzögerungen von 0,1,..., Q-1 Zellenzeiten ergeben und zwischen den Eingangsanschlüssen und den Ausgangsanschlüssen angeordnet sind,
- Steuermittel (201), die Mittel umfassen, die jede Zelle zu einem Ausgangsanschluss leiten und eine in den Pufferspeichern auf jede Zelle anzuwendende Verzögerung auswählen, derart, dass die Zellen einzeln nacheinander am selben Ausgangsanschluss ankommen;
**dadurch gekennzeichnet, dass** sie außerdem mehrere zusätzliche Ausgangsanschlüsse und ein so genanntes Rücklauf-Verzögerungselement (104), das an diese zusätzlichen Ausgangsanschlüsse sowie an mehrere so genannte Rücklaufanschlüsse angeschlossen ist, umfasst, wobei dieses Verzögerungselement auf jede Zelle eine steuerbare Verzögerung, die einer variablen Anzahl von Zellenzeiten entspricht, anwenden kann,
und dass die Steuermittel (201) Mittel umfassen, die:
-- jede Zelle zu einem Ausgangsanschluss, für den sie bestimmt ist, leiten, wenn sie direkt zu diesem Anschluss geleitet werden kann, oder diese Zelle zu einem zusätzlichen Ausgangsanschluss leiten, wenn sie nicht direkt zu dem Ausgangsanschluss, für den sie bestimmt ist, geleitet werden kann,
-- und eine Verzögerung auswählen, die in dem Rücklauf-Verzögerungselement auf jede Zelle anzuwenden ist, so dass diese Zelle in die Pufferspeicher zurückgeführt wird, ohne dass die Gefahr besteht, dass sie überladen werden.

2. Photonen-Schaltmatrix nach Anspruch 1, **dadurch gekennzeichnet, dass** das Rücklaufverzögerungselement (104) umfasst: ein einziges Element mit steuerbarer Verzögerung für sämtliche zusätzlichen Ausgangsanschlüsse; und einen optischen Multiplexer, der die Mehrzahl von zusätzlichen Ausgangsanschlüssen, die die modulierten Zellen auf unterschiedlichen Trägerwellen liefern, mit einem Eingang dieses Verzögerungselements, das diese Zellen mit unterschiedlichen Trägerwellen wahlweise verzögert, koppelt.

3. Photonenspaltmatrix nach Anspruch 2, **dadurch gekennzeichnet, dass** zwischen jedem der zusätzlichen Ausgangsanschlüsse und dem Rücklauf-Verzögerungselement (104) ein steuerbarer Wellenlängen-Umsetzer (cf1, ..., cfK) ermöglicht, die Wellenlänge der Trägerwelle einer Zelle wahlweise zu ändern, um durch Wellenlängen-Multiplexierung die Anzahl von Zellen, die durch das Verzögerungselement verzögert werden können, zu erhöhen.

4. Photonenschaltmatrix nach Anspruch 2 oder 3, **dadurch gekennzeichnet, dass** der Ausgang des steuerbaren Verzögerungselements nach der Wellenlängen-Demultiplexierung mit den mehreren zusätzlichen Eingangsanschlüssen gekoppelt ist.

5. Photonen-Sehaltmatrix nach Anspruch 2 oder 3, **dadurch gekennzeichnet, dass** der Ausgang des steuerbaren Verzögerungselements nach der Wellenlängen-Demultiplexierung mit den mehreren Eingangsanschlüssen auf der Einlassseite der Modulationsmittel gekoppelt ist.

6. Photonen-Schaltmatrix nach Anspruch 5, **dadurch gekennzeichnet, dass** zwischen den Ausgang des Verzögerungselements nach der Demultiplexierung und die mehreren Eingangsanschlüsse eine räumliche Schaltmatrix eingefügt ist.
